# FASCICULE DE BREVET EUROPEEN

(11) **EP 1 285 246 B1**
(45) Date de publication et mention de la délivrance du brevet: **04.02.2009**
(21) Numéro de dépôt: 01936534.5
(22) Date de dépôt: 15.05.2001
(51) Int. Cl.: G01K 13/02

(54) **CAPTEUR POUR LA MESURE D'AU MOINS UN PARAMETRE PHYSIQUE SUR UN FLUX DE FLUIDE ET NOTAMMENT CAPTEUR DEGIVRE DE TEMPERATURE TOTALE D'AIR**
SENSOR ZUR BESTIMMUNG MINDESTENS EINES PHYSIKALISCHEN PARAMETERS EINES FLUIDFLUSSES UND INSBESONDERE FROSTFREIER TOTALTEMPERATURSENSOR FÜR LUFT
PROBE FOR MEASURING AT LEAST A PHYSICAL PARAMETER OF A FLUID FLOW AND IN PARTICULAR DE-ICED TOTAL AIR TEMPERATURE PROBE

(30) Priorité: 15.05.2000 FR 0006137
(43) Date de publication de la demande: 26.02.2003
(73) Titulaire: Auxitrol SA, 18000 Bourges (FR)
(72) Inventeur: BERNARD, Marc, F-18400 Saint-Florent-sur-Cher (FR)
(74) Mandataire: Callon de Lamarck, Jean-Robert
(86) Numéro de dépôt international: PCT/FR2001/001484
(87) Numéro de publication internationale: WO 2001/088496

(56) Documents cités:
- EP-A- 0 835 804
- FR-A- 2 680 872
- US-A- 4 268 284
- US-A- 4 644 806
- US-A- 5 025 661
- US-A- 5 331 849
- US-A- 5 653 538

## Description

La présente invention est relative à un capteur pour la mesure de paramètres physiques sur un flux de fluide et notamment à un capteur dégivré de température totale d'air.

Elle trouve avantageusement application dans le domaine de l'aéronautique pour la mesure de température totale d'air en entrée de moteurs et/ou à l'extérieur des aéronefs.

De nombreux capteurs de température totale d'air dégivrés sont déjà connus.

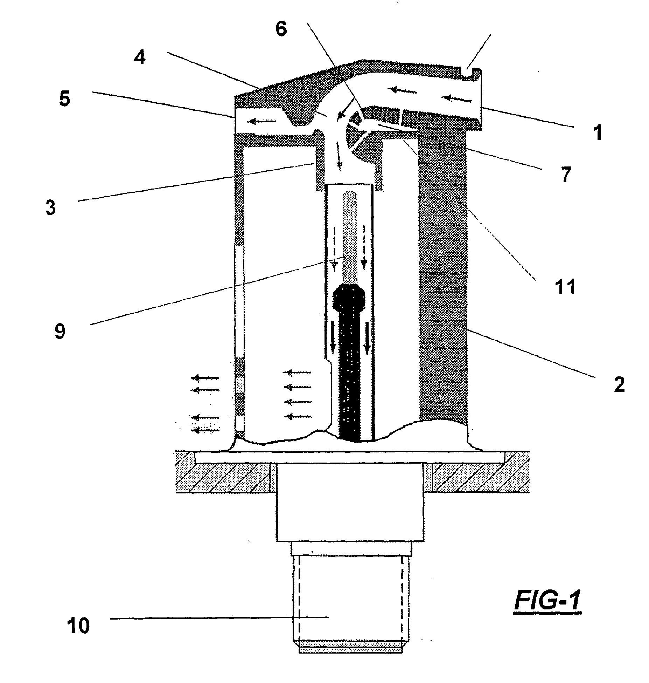

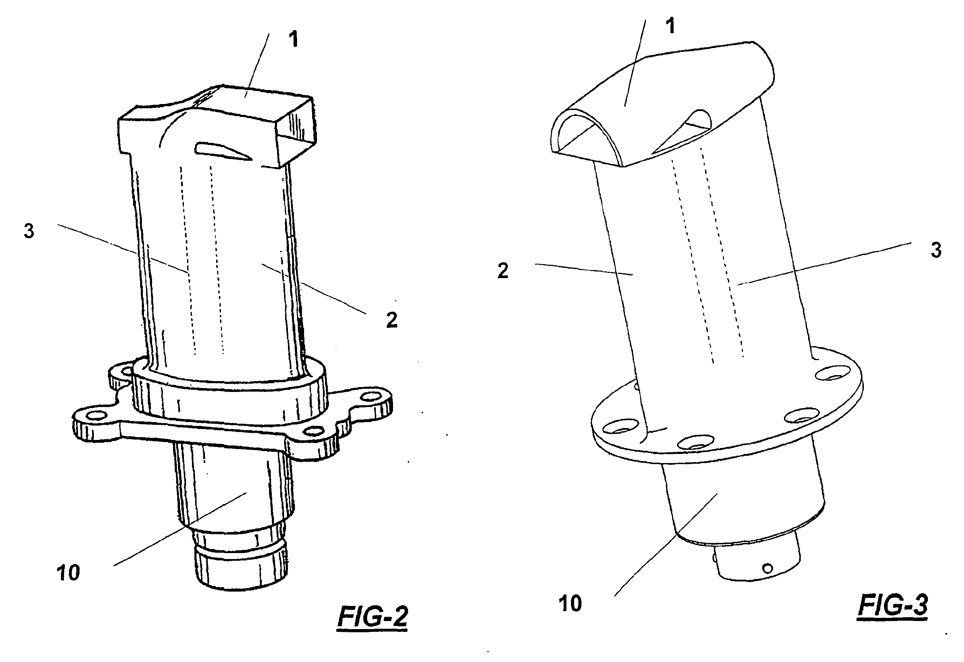

Classiquement, ils comportent, ainsi que l'illustrent les figures 1 et 2, une prise d'air 1 rapportée sur un corps profilé 2 (ayant un profit type aile d'avion) dans lequel est ménagé un conduit 3 permettant l'écoulement du fluide à mesurer et communiquant avec la prise d'air 1 par l'intermédiaire une zone de séparation inertielle 4. Cette zone permet de séparer de l'air les éléments de masse importante relativement à celui-ci (eau, givre, sable, ...) par centrifugation, ceux-ci étant évacués du capteur par une zone d'éjection 5 opposée à la prise d'air. Afin d'éviter les phénomènes de décollement du fluide dans la zone de séparation inertielle 4, des trous 6 sont ménagés dans la paroi de celle-ci, du côté opposé à la zone d'éjection 5 et communiquent avec l'extérieur par l'intermédiaire d'une chambre 7 qui s'étend transversalement dans l'épaisseur du corps du profilé 2. Le différentiel de pression existant entre l'intérieur et l'extérieur du capteur permet l'aspiration de la couche limite par les trous 6.

L'ensemble de la prise d'air 1, du corps profilé 2, du conduit 3, de la zone de séparation inertielle 4 et de l'éjection 5 est dégivré électriquement par des résistances chauffantes positionnées dans des rainures 8 ménagées dans les parois.

Un élément 9 formant sonde de mesure s'étend à l'intérieur dudit conduit 3. Cet élément 9 est par exemple un fil de platine constituant une résistance thermométrique, isolé thermiquement du corps profilé 2.

Le bilan d'erreur de mesure associé à la résistance thermométrique protégée dans un corps dégivré comprend classiquement l'erreur de réchauffage (erreur induite par le système de dégivrage), l'erreur de récupération (écart entre la mesure et la quantité mesurée lorsque le système de réchauffage ne fonctionne pas), l'erreur d'auto-échauffement (induite par l'alimentation de la résistance thermométrique), l'erreur de conduction, l'erreur de rayonnement, l'erreur de temps de réponse. L'erreur de réchauffage est notamment une erreur dépendant de la géométrie du capteur et de la puissance du système de dégivrage.

Les différents fils formant résistance thermométrique ou résistance de chauffage sont reliés à une embase de connexion 10.

Classiquement, ainsi que l'illustre la figure 2, la prise d'air 1 est de section rectangulaire et il en est de même, au moins sur une certaine portion, du conduit 3 qui se raccorde à ladite prise d'air.

Classiquement également, le plan 11 supportant la chambre 7 et reliant le corps profilé 2 à la prise d'air 1, est parallèle à la direction du flux d'air, c'est-à-dire perpendiculaire au plan supportant la prise d'air 1.

Les capteurs du type de ceux illustrés sur les figures 1 et 2 doivent, notamment lorsqu'ils sont utilisés en aéronautique pour la mesure de température totale d'air, pouvoir fonctionner sous des conditions givrantes particulièrement sévères.

Le but de l'invention est de proposer une structure nouvelle de capteurs qui permette de tenir des conditions de givrage encore plus sévères que les capteurs connus à ce jour et ce sans augmentation de la puissance électrique de dégivrage utilisée, de façon à ne pas fausser les mesures de l'élément formant sonde.

La solution proposée par l'invention est un capteur de mesure de paramètres physiques sur un fluide selon la revendication 1.

Notamment, le capteur proposé comporte avantageusement un corps profilé, un conduit aménagé à travers ledit corps profilé pour permettre l'écoulement du fluide, une zone de séparation inertielle, une éjection des particules, un système d'aspiration de couche limite composé d'une chambre et de trous reliant l'intérieur et l'extérieur du capteur, une prise d'air qui termine le corps à une extrémité de celui-ci et qui débouche dans le conduit, caractérisé en ce que ladite prise d'air est de section intérieure au moins partiellement arrondie.

Le conduit du corps profilé est avantageusement également de section arrondie.

Le plan supportant la chambre d'aspiration de couche limite et reliant le corps profilé à la prise d'air forme un angle non nul avec la direction du flux de fluide.

D'autres caractéristiques et avantages de l'invention ressortiront encore de la description qui suit, laquelle est purement illustrative et non limitative et doit être lue en regard des figures annexées sur lesquelles :
- la figure 1 est une représentation schématique en coupe d'un capteur dégivré de mesure de température totale d'air ;
- la figure 2 est une représentation schématique en vue en perspective d'un capteur type de celui de la figure 1, conforme à l'état de la technique connu ;
- les figure 3 et 4 sont une représentation schématique en perpective d'un capteur conforme à un mode de réalisation possible de l'invention ;
- les figures 5a à 5e sont des représentations en vue en coupe selon les lignes a-a, b-b, c-c, d-d et e-e de la figure 4.

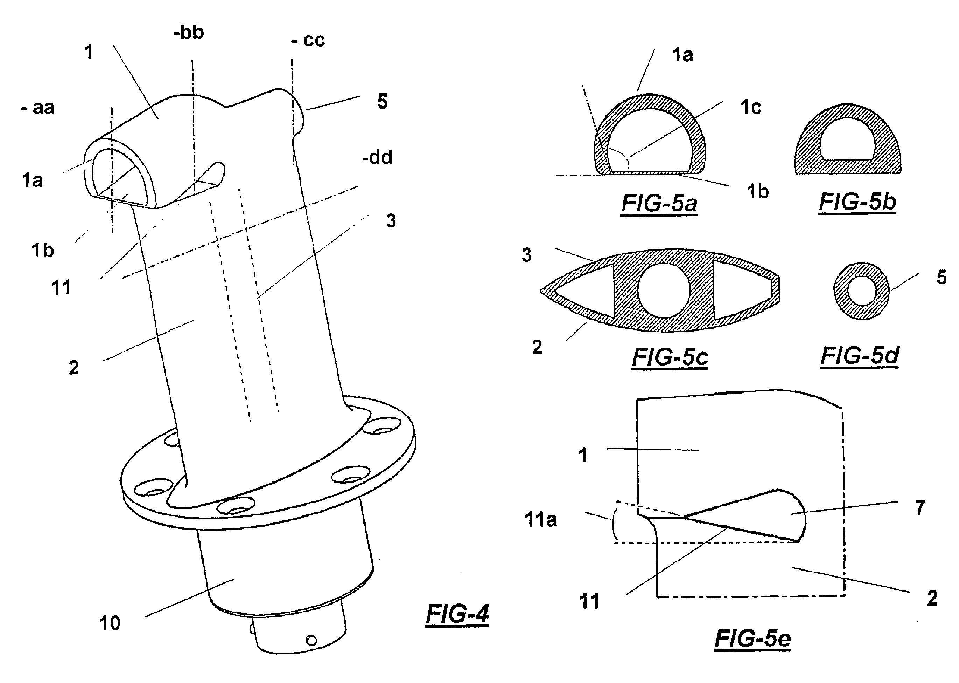

Les capteurs qui sont conformes à des modes de réalisation possibles de l'invention et qui sont représentés sur les figures 3 et 4 comportent eux aussi une prise d'air 1 supportée par un corps profilé 2 et débouchant dans un conduit 3 qui s'étend dans ledit corps 2, ce conduit recevant un élément formant sonde (non représenté).

Selon l'invention, la prise d'air 1 est de section intérieure au moins partiellement arrondie, notamment de section semi-circulaire ou semi-elliptique, au lieu d'être de section rectangulaire.

Notamment, dans l'exemple illustré sur les figures, la prise d'air 1 est définie par une portion 1a de forme sensiblement cylindrique tronquée par une surface plane 1b qui s'étend entre le bord d'ouverture de la prise d'air 1 et la zone de séparation inertielle 4.

La chambre 7 de séparation de la couche limite est définie entre d'une part une paroi dont une face est la surface plane 1b et dont l'autre face délimite une partie de ladite chambre 7 et d'autre part une surface plane 11 qui s'étend jusqu'à la paroi qui délimite la zone de séparation inertielle 4 et ladite chambre 7.

Cette surface 11 est inclinée selon un angle 11a non nul par rapport à la direction du flux de fluide.

Notamment, elle fait avantageusement un angle compris entre 5 et 45° par rapport à la direction du flux d'air.

La hauteur de la prise d'air est au minimum égale au rayon dudit cylindre, la partie 1a étant au moins un demi cylindre.

Ainsi, au niveau des intersections entre la portion en forme de cylindre partiel 1a et le fond 1b, l'angle entre la tangente entre ladite portion 1a et le fond 1b est supérieur à 90° (figures 5a et 5b).

Notamment, la hauteur du cylindre correspond avantageusement à une fois et demie le rayon du cylindre.

En entrée de la prise d'air 1, le rayon intérieur du cylindre 1a est par exemple de 1 cm.

Le conduit 3 qui s'étend dans le corps 2 et la zone d'éjection 5 sont égalemlent de section arrondie, notamment circulaire ou elliptique (figure 5c et 5d).

L'angle 11a reliant le corps profilé 2 à la prise d'air 1 vaut par exemple 15° (figure 4e).

L'utilisation d'une telle forme pour la prise d'air 1, ainsi également le cas échéant pour le conduit 3 à l'intérieur du corps profilé 2, permet de réduire la surface intérieure du capteur sur laquelle le givre est susceptible de se déposer, supprime les zones de changement de section de passage de l'air à mesurer, élimine les zones mortes générées dans les angles :
- à puissance de dégivrage égale, elle permet de tenir des conditions givrantes plus sévères que les capteurs classiques et d'être conforme aux dernières évolutions des normes aéronautiques ;
- en conditions givrantes identiques, la puissance de dégivrage nécessaire est moins importante de 10 à 20 % que pour les capteurs de l'art antérieur ;
- à puissance de dégivrage identique, l'erreur de mesure due au système de réchauffage est diminuée ;
- la stabilité de la mesure est améliorée en regard du taux de turbulence qui est inférieur à celui généré par la forme de prise d'air des capteurs classiques ;
- la sensibilité à une variation d'incidence du flux d'air à mesurer est diminuée.

L'utilisation d'un angle 11a non nul entre la surface plane 11 et la direction du flux d'air permet d'optimiser le différentiel de pression entre la chambre 7 et l'intérieur du capteur :
- la capacité d'aspiration des trous 6, notamment de l'eau issue du dégivrage du fond plat 3b, est augmentée ;
- le comportement du capteur en fonction de la vitesse du flux d'air est amélioré (l'efficacité du système d'aspiration est conservé sur l'ensemble du domaine de vol).

Notamment, le capteur qui vient d'être décrit permet des mesures sur l'ensemble du domaine de vol des avions militaires et commerciaux, pour des concentrations d'humidité ou de givre jusqu'à 5 g/m3, avec des puissances consommées identiques voire inférieures à celles classiquement utilisées (de l'ordre de 250 à 500 Watts suivant le dimensionnel de l'application).

## Revendications

1. Capteur de mesure de paramètres physiques sur un fluide comportant une prise d'air (1) rapportée sur un corps profilé (2), un conduit (3) aménagé dans ledit corps profilé pour permettre l'écoulement du fluide et communiquant avec ladite prise d'air, **caractérisé en ce que** ladite prise d'air est de section intérieure au moins partiellement arrondie et rapportée au corps profilé par l'intermédiaire d'une surface plane (1b).

2. Capteur selon la revendication 1, **caractérisé en ce que** la tête de la prise d'air est de section semi-circulaire ou semi-elliptique.

3. Capteur selon la revendication 1, **caractérisé en ce que** la prise d'air a une forme définie par un fond plat et un cylindre partiel tronqué par le fond plat.

4. Capteur selon la revendication 1, **caractérisé en ce que** la prise d'air a une forme définie par une partie de cylindre et un fond plat, de sorte que la hauteur de la prise d'air soit au minimum égale au rayon dudit cylindre.

5. Capteur selon l'une des revendications précédentes, **caractérisé en ce que** le conduit du corps profilé est de section arrondie.

6. Capteur selon la revendication 5, **caractérisé en ce que** le conduit du corps profilé est de section circulaire ou elliptique.

7. Capteur selon l'une des revendications précédentes, **caractérisé en ce qu'**elle comporte une chambre de séparation de la couche limite définie entre d'une part une paroi dont une surface plane délimite la prise d'air et d'autre part d'autre part une surface plane qui s'étend jusqu'à une paroi qui délimite une zone de séparation inertielle, cette surface plane étant inclinée d'un angle non nul par rapport à la direction du flux de fluide.

8. Capteur selon la revendication 7, **caractérisé en ce que** cet angle est compris entre 5 et 45° par rapport à la direction du flux d'air.

9. Capteur selon l'une des revendications précédentes, **caractérisé en ce qu'**il comporte au moins un élément formant sonde de température disposé dans le conduit.

## Claims

1. A sensor for measuring physical parameters of a fluid, the sensor comprising an air intake (1) fitted on a streamlined body (2), and a duct (3) formed in said streamlined body to enable the fluid to flow and communicating with said air intake, the sensor being **characterized in that** said air intake has an inside section that is, at least in part, rounded and fitted on the streamlined body via a surface (1b) that is plane.

2. A sensor according to claim 1, **characterized in that** the air intake head is semicircular or semi-elliptical in section.

3. A sensor according to claim 1, **characterized in that** the air intake is of a shape defined by a flat bottom and a portion of a cylinder truncated by the flat bottom.

4. A sensor according to claim 1, **characterized in that** the air intake is of a shape defined by a portion of the cylinder and a flat bottom, such that the height of the air intake is not less than the radius of said cylinder.

5. A sensor according to any preceding claim, **characterized in that** the duct in the streamlined body is of rounded section.

6. A sensor according to claim 5, **characterized in that** the duct of the streamlined body is of section that is circular or elliptical.

7. A sensor according to any preceding claim, **characterized in that** it has a boundary layer separation chamber defined firstly between a wall whose plane surface defines the air intake and secondly a plane surface that extends to a wall defining an inertial separation zone, said plane surface sloping at a non-zero angle relative to the fluid flow direction.

8. A sensor according to claim 7, **characterized in that** said angle lies in the range 5° to 45° relative to the air flow direction.

9. A sensor according to any preceding claim, **characterized in that** includes at least one temperature probe-forming element placed inside the duct.

## Patentansprüche

1. Mess-Sensor physikalischer Parameter eines Fluids, eine Luftöffnung (1) in einem Profilkörper (2) umfassend, eine in den Profilkörper eingearbeitete Leitung (3), um das Fließen des Fluids zu erlauben, die mit der Luftöffnung zusammenarbeitet, **dadurch gekennzeichnet, dass** die Luftöffnung einen mindestens teilweise abgerundeten Innendurchmesser hat und am Profilkörper über eine ebene Fläche (1b) anliegt.

2. Sensor nach Anspruch 1, **dadurch gekennzeichnet, dass** der Kopf der Luftöffnung einen halbkreisförmigen oder halb elliptischen Querschnitt hat.

3. Sensor nach Anspruch 1, **dadurch gekennzeichnet, dass** die Luftöffnung eine Form hat, die von einem flachen Boden und einem von dem flachen Boden abgestumpften Teilzylinder definiert ist.

4. Sensor nach Anspruch 1, **dadurch gekennzeichnet, dass** die Luftöffnung eine Form hat, die von einem Zylinderabschnitt und einem flachen Boden definiert ist, so dass die Höhe der Luftöffnung mindestens gleich dem Halbmesser des Zylinders entspricht.

5. Sensor nach einem der vorangehenden Ansprüche, **dadurch gekennzeichnet, dass** die Leitung des Profilkörpers einen abgerundeten Querschnitt hat.

6. Sensor nach Anspruch 5, **dadurch gekennzeichnet, dass** die Leitung des Profilkörpers einen kreisrunden oder elliptischen Querschnitt hat.

7. Sensor nach einem der vorangehenden Ansprüche, **dadurch gekennzeichnet, dass** er eine Kammer zur Trennung der Grenzschicht umfasst, die zwischen einerseits einer Wand definiert ist, von der eine ebene Fläche die Luftöffnung begrenzt und andererseits auf der anderen Seite eine ebene Fläche, die sich bis zu einer Wand erstreckt, die einen Trägheitstrennbereich begrenzt, wobei diese ebene Fläche in einem Winkel von ungleich Null im Verhältnis zur Richtung des Fluidstroms geneigt ist.

8. Sensor nach Anspruch 7, **dadurch gekennzeichnet, dass** dieser Winkel zwischen 5 und 45° inklusive im Verhältnis zur Richtung des Luftstroms ist.

9. Sensor nach einem der vorangehenden Ansprüche, **dadurch gekennzeichnet, dass** er mindestens ein Element umfasst, das eine Temperatursonde bildet, die in der Leitung angeordnet ist.
